# EUROPEAN PATENT SPECIFICATION

(11) **EP 2 020 718 B1**
(45) Date of publication and mention of the grant of the patent: **05.09.2012**
(21) Application number: 07425490.5
(22) Date of filing: 31.07.2007
(51) Int. Cl.: H02B 1/052

(54) **Holding device for coupling an electrical apparatus to an apparatus mounting rail**
Haltevorrichtung zur Kopplung einer elektronischen Vorrichtung an eine Gerätemontageschiene
Dispositif support pour le raccordement d'un appareil électrique sur un rail de montage d'appareil

(43) Date of publication of application: 04.02.2009
(73) Proprietor: BTICINO S.P.A., 20154 Milano (IT)
(72) Inventor: Mondellini Claudio, 24047 Treviglio (Bergamo) (IT)
(74) Representative: Siniscalco, Fabio

(56) References cited:
- DE-U1-202004 013 226
- US-A1- 2003 013 351

## Description

The present invention refers to a holding device for applying an electrical apparatus, such as a switch or similar, to an apparatus mounting rail, which is for example disposed inside an electrical panel.

In particular, the invention relates to a holding device of the type defined in the preamble of claim 1.

Such a holding device is known for example from the Italian patent application RM 2006 A 000145 of same applicant.

In order to fix an electrical apparatus on an apparatus mounting rail, it is known to use a holding plate which is to be interposed between the electrical apparatus and the apparatus mounting rail, wherein the holding plate comprises members for fixing the electrical apparatus to same plate and coupling members for fixing the assembly comprised of the electrical apparatus and the apparatus mounting rail.

DE 20 2004 013226 discloses an adapter for the installation of electric devices, comprising a first and a second body, including respective fixing means, which are movable relative to each other. Particularly, the second body can be locked relative to the first body in order to fix an electric device to the adapter.

US 2003/013351 discloses a mounting plate for attachment of a switching device on a mounting rail, wherein the mounting plate includes a first and a second body, including respective fixing means, which are movable relative to each other. Particularly, the second body is adapted to be thrust by a spring in order to removably fix the switching device to the mounting plate.

A problem connected to the use of holding plates according to the known art is that there are commercial electrical apparatuses of different length. This difference in length, for example in the case of "cased" breakers, may be connected to the presence of a differential protection integrated module.

On the market there is for example a type of "molded case" breakers simply comprising a magneto-thermal breaker. This type of apparatus is comparably "short". For example a second type of "molded case" breaker apparatus is provided, comprising a magneto-thermal breaker and an associated differential protection module. This second type of breaker is relatively "longer" than the first type described.

In view of the above, in order to provide electrical apparatuses of varying length on an apparatus mounting rail, it is necessary to provide different types of holding devices, with correspondingly different holding plates, with a consequent increase in production costs, and therefore of the cost of same holding devices.

An object of the present invention is to provide a holding device for solving the above mentioned problem with reference to the known art, and which in particular allows the provision of electrical apparatuses of different length on an apparatus mounting rail.

This object is achieved according to the invention by a reconfigurable holding device whose principal characteristics are defined in appended claim 1.

Further characteristics and advantages of the invention will become apparent from the following detailed description, which is purely illustrative and non limitative, with reference to appended drawings, in which:
fig. 1 shows a perspective view of an electrical apparatus and of a holding device according to the present invention, which is mounted on an apparatus mounting rail, wherein the front side of said device is particularly visible,
fig. 2 shows a perspective view of the electrical apparatus and holding device according to fig. 1, wherein the back side of said device is particularly visible,
fig. 3 and fig. 4 show two almost frontal front and rear perspective views, respectively, of the holding device according to the preceding figures,
fig. 5 shows a perspective view of an electrical apparatus mounted with the holding device according to the present invention.
Fig. 6 shows a perspective view of the electrical apparatus of fig. 1, which is disposed on the apparatus mounting rail by means of the holding device according to the invention, and
Fig. 7 shows an almost frontal perspective view of a sliding sledge element of a holding device according to the present invention.

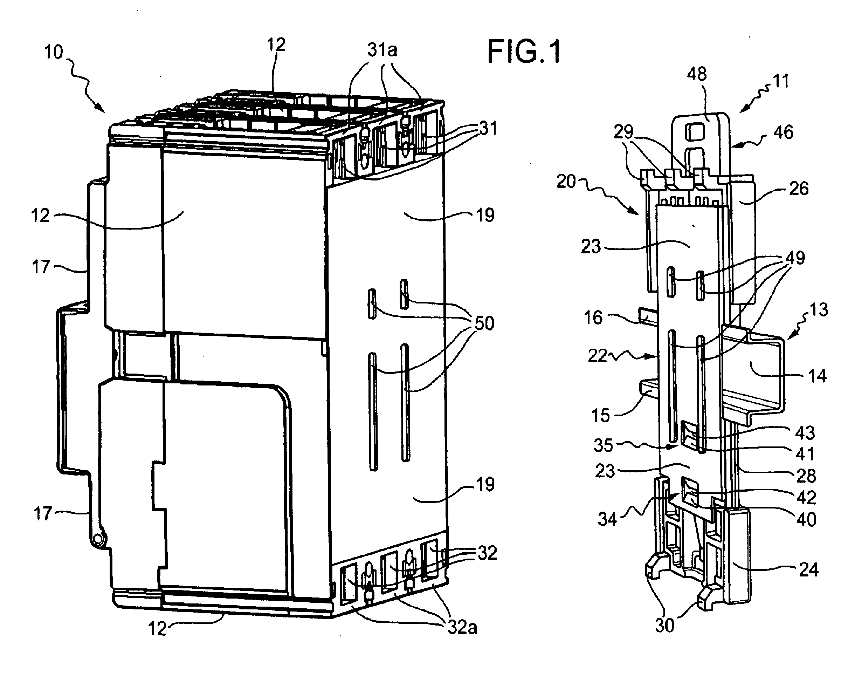

In fig. 1, in a purely illustrative way, an electrical apparatus, in particular a "molded case" circuit breaker 10, and a holding device 11 according to the present invention, are shown. A "molded case" circuit breaker, as opposed to a so called "open" circuit breaker, comprises a cased body 12 of electrically insulating material, which has a supporting function for the internal mechanisms of the same circuit breaker 10.

The circuit breaker 10 may be removably disposed, by means of the holding device 11, on an apparatus mounting rail 13, which is for example fixed on a back panel of an electrical board (panel and board are not illustrated in the drawings). The apparatus mounting rail 13 is for example a standardized rail, for example a DIN rail, which is formed by a metallic profiled segment comprising a bottom wall and two opposed lateral walls which define a channel 14. Each of said two walls of the apparatus mounting rail 13 is provided with a respective protruding edge 15, 16, where the two protruding edges form a horizontal guide for coupling to the holding device 11.

It is to be noted that the holding device 11 according to the present invention may be used for connecting an electrical apparatus and an apparatus mounting rail, both of a different type with respect to the above said type, which is only described for exemplary and non limitative purposes.

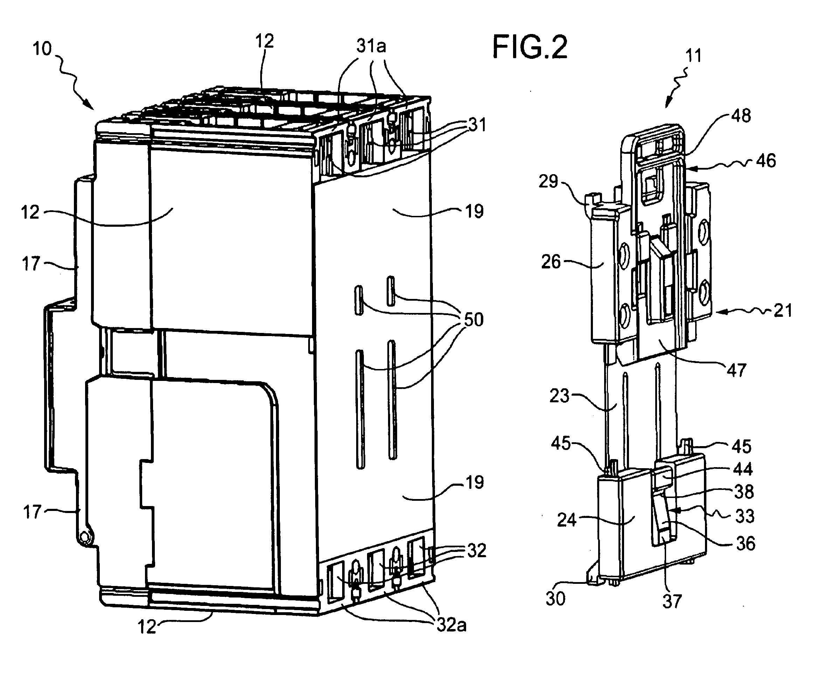

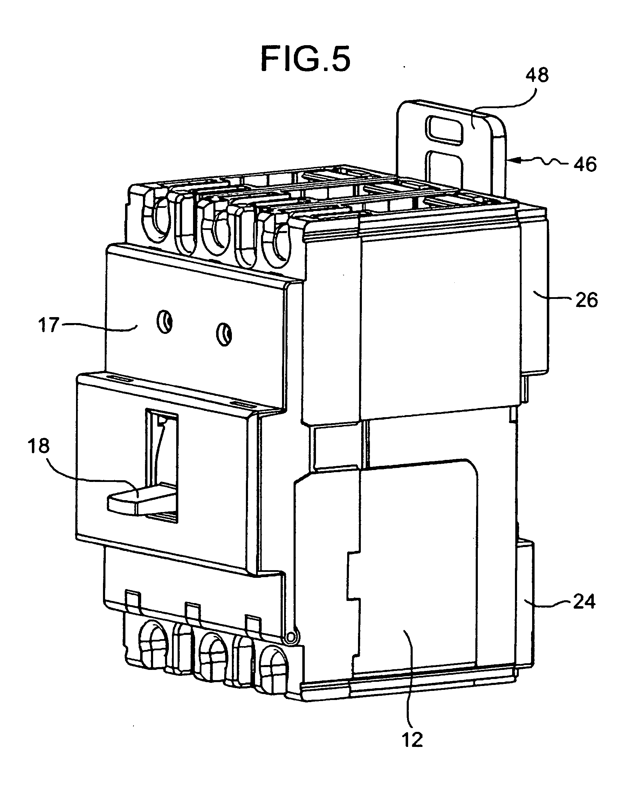

In the example shown, the cased body 12 of circuit breaker 10 comprises a front side 17, from which an actuating lever 18 protrudes (shown in fig. 5), and a rear side 19 (shown in fig. 1 and 2), which faces the holding device 11, when the circuit breaker 10 is fixed on the same.

The holding device 11 comprises in turn a front side 20 (in fig. 1) which is to be oriented towards the rear side 19 of circuit breaker 10, and a rear side 21 (in fig. 2), which is to be oriented towards the apparatus mounting rail 13.

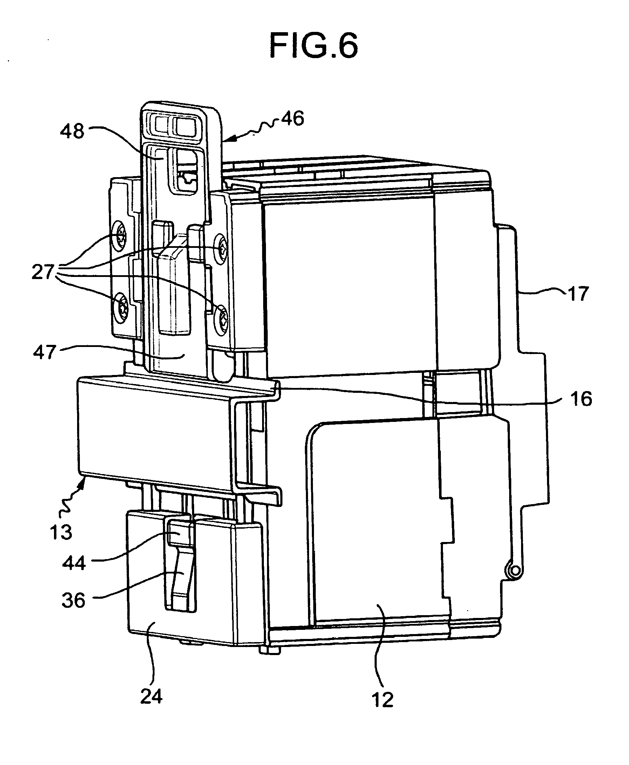

The holding device 11 comprises a primary structure 22, which, in the example shown, comprises a first generally plate-like body 23 and a second generally plate-like body 24. To the body 23 a further generally plate-like body 26 is stably connected by means of screws 27 (in fig. 6).

The second body 24, in the example shown, is a sledge element slidingly coupled to the body 23, and as will become more apparent in the following description, is selectively lockable in one of different possible positions with respect to body 23.

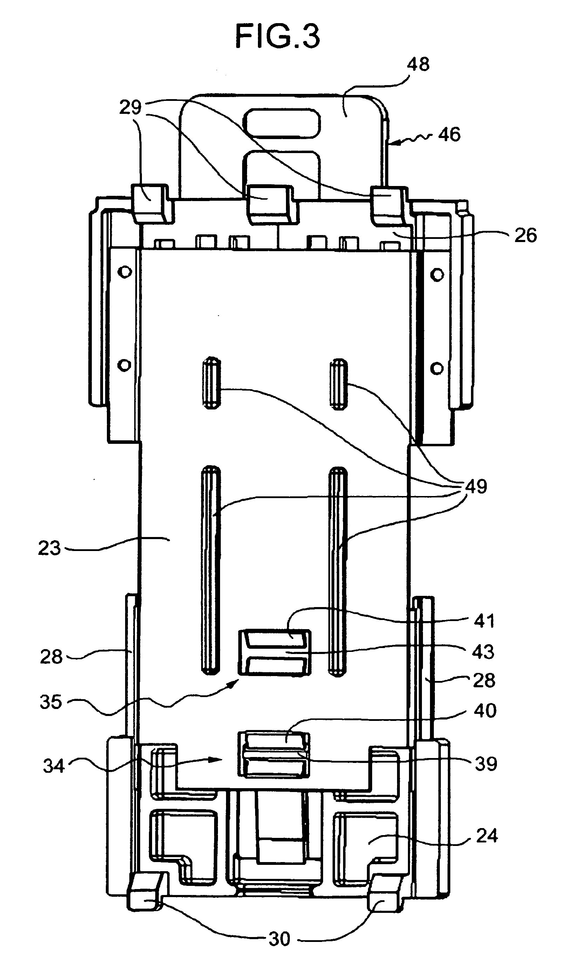

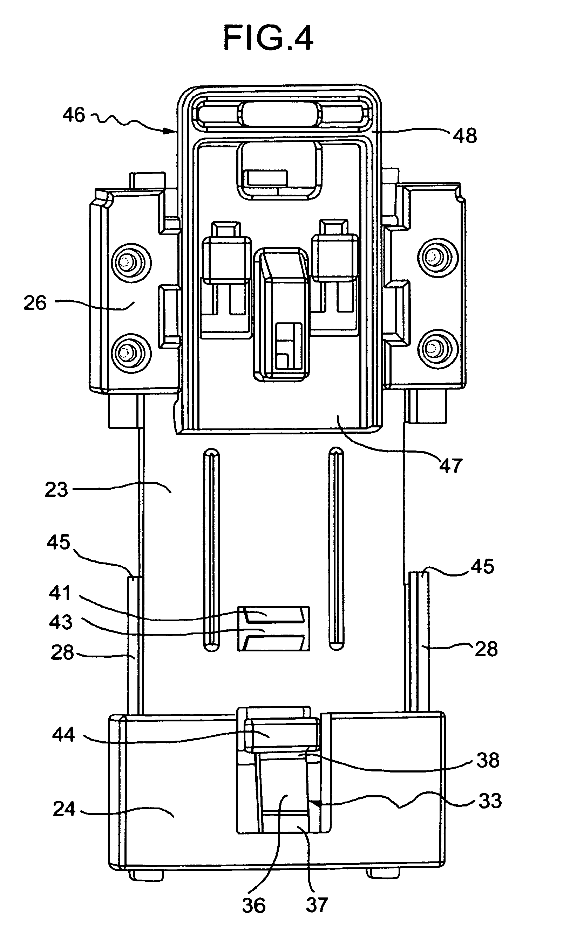

Body 23 comprises two lateral protruding edges 28 (fig. 1, 3 and 4) which function as parallel straight rails for translating the second body 24. This body comprises in turn lateral profiles, in which the edges 28 of body 23 engage.

Body 26 and second body 24 are preferably formed of hard plastic. Body 23 is on the contrary formed preferably of metal or plastic.

The holding device 11 includes, on the front side 20, hook shaped fixing members 29, 30 known per se, which are integral with the body 26 and the body 24, and which are directed upwards and downwards, respectively.

These fixing members 29, 30 are provided in order to interact with conjugated fixing members 31a, 32a, also known per se, which are provided in the cased body 12 of circuit breaker 10 in order to removably fix the circuit breaker 10 to the holding device 11.

In the illustrated embodiment, the rear side of body 12 of circuit breaker apparatus 10, comprises a plurality of upper openings 31 and lower openings 32, which are defined on the upper and lower side, respectively, by transversal retaining ledges 31a and 32a in fig. 1 and 2. These ledges represent the conjugated fixing members with which, as will be described later, the hook members 29, 30 of holding device 11 cooperate.

As is apparent to the skilled in the art, in an alternative embodiment, the hook shaped fixing members 29, 30 may be provided on the circuit breaker 10 whereas the conjugated fixing members 31a, 32a may be provided on the holding device 11.

It is to be noted that, since the fixing means 30 are integral with body 24, the distance between these members 30 and the fixing members 29 may be changed, varying the operative position in which the body 24 is locked on body 23, as will be described later, in order to adapt the holding device 11 to electrical apparatuses of different length.

The second body 24, besides of the fixing members 30, further comprises a locking element 33 (fig. 2), which functions as to removably lock said second body 24 with respect to said first body 23, for example in two distinct and predetermined locking positions. The locking element 33 is to this end provided to selectively engage at least a first or a second retaining seat 34, 35, provided on body 23, in positions spaced apart along the direction of movement of body 24.

In the exemplary embodiment, the locking element 33 may be clipped on each seat 34, 35, and allows a relative sliding of second body 24 with respect to the first body 23, once it has been released from said seats.

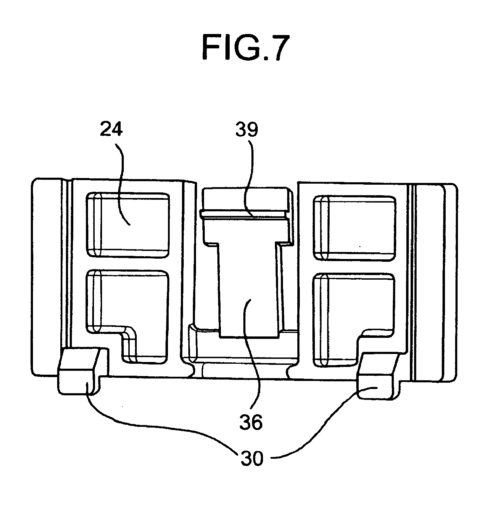

In the preferred embodiment shown, the locking element 33 comprises an elastic protrusion 36 (fig. 2) having a proximal end 37 which is connected to body 24 and a distal end 38 provided with a tooth 39 (fig. 7).

The tooth 39 protrudes towards the first body 23 and engages each of seats 34, 35, which in the illustrative embodiment shown comprise respective pairs of opposed slanted flaps 40, 41, defining corresponding slits 42, 43 between each other.

The opposed flaps 40, 41 extend from body 23 towards tooth 39 of elastic protrusion 36. The flaps of each pair are in particular angled and converge towards the tooth 39.

In the example shown, the elastic appendage 36 extends longitudinally and is provided, near said distal end 38, on the side facing away from tooth 39, a formation 44, resembling a parallelepiped-like head, which may be engaged for example by a tool, like a screwdriver, in order to achieve the disengagement of tooth 39 from seat 34 or 35, retaining the same.

With reference to fig. 2, in the example shown, starting from a condition, in which apparatus 10 is disengaged from holding device 11, in order to achieve the condition of mutual engagement, it is necessary to initially move the cased body 12 of apparatus 10 toward holding device 11; then, the upper fixing members 29 of holding device are to be inserted in corresponding openings 31 of apparatus 10, in order to lock said members 29 to the corresponding fixing ledges 31a, by a relative upwards movement of holding device 11. At this point, the elastic appendage 36 is bent backwards, engaging formation 44, in order to disengage tooth 39 from its seat, and thereafter the body 24 is slid upwards, until it reaches the position in which the lower fixing members 30 face corresponding openings 32 of apparatus 10, in which they may be inserted. During this sliding movement, the elastic appendage 36 remains in a bent position, and accumulates elastic energy.

After the introduction of members 30 into the openings 32, the body 24 is slid downwards, with respect to the plate-like body 23, until the simultaneous engagement of members 30 with retaining ledges 32a and snapping in of tooth 39 into slit 34 or 35, which corresponds to the length of apparatus 10, takes place, due to the release of elastic energy previously accumulated in appendage 36.

With reference to fig. 6, the holding device 11 moreover comprises a coupling device for removably coupling the holding device 11 to the apparatus mounting rail 13.

In the preferred embodiment shown, this coupling device comprises two slits 45 which are provided in the upper ends of edges 28 of plate-like body 23, into which the lower edge 15 of apparatus mounting rail 13 is engaged. Said coupling device moreover comprises a member 46 which may slide vertically in body 26 and engages and locks, by means of its lower end 47, the upper edge 16 of apparatus mounting rail 13, as shown for example in fig. 6.

The sliding member 46 is coupled, in a way known per se, to a spring (not shown) which pushes it downwards.

Preferably, the upper end 48 of sliding element 46 protrudes beyond the upper side of body 26 of holding device 11, and beyond the upper side of coupled apparatus 10, in order to be raised by an operator, manually or by means of a tool, in order to disengage the sliding member 46 from rail 13, and to allow the disengagement of holding device 11 (and of apparatus 10, which may be connected to same) from rail 13.

In this way, it is advantageously possible to couple the apparatus holding rail 13 to the assembly 10, 11, comprising the circuit breaker 10 and the holding device 11, without the need for tools.

Finally, with reference to fig. 1, it may be noted that body 23 includes longitudinal raised formations 49 on the upper side 20 of holding device 11. These raised portions 49 are to be coupled to corresponding cavities 50 formed in the cased body 12 of apparatus 10, in order to facilitate a precise centering of said apparatus 10 with respect to holding device 11.

Based on what has been previously stated, it is therefore possible to appreciate how a holding device according to the invention may solve above said drawbacks with reference to the known art.

On the basis of the inventive concept, the embodiments and details may be extensively varied with respect to above said description and drawings, which are only illustrative and non limitative, without departing from the scope of the invention, as defined in the appended claims.

## Claims

1. Holding device (11) for coupling an electrical apparatus (10) to an apparatus mounting rail (13), wherein the holding device comprises:
- a primary structure (22), comprising first (29) and second (30) fixing means, spaced apart along a direction corresponding to an extension of the electrical apparatus, in order to removably fix said electrical apparatus (10) to the holding device (11), at least one of said first (29) and second (30) fixing means being movable among a plurality of positions; and
- coupling means (45, 46, 47) for removably coupling the holding device (11) to said apparatus mounting rail (13);
the holding device (11) being **characterized in that**
at least one of said first (29) and second (30) fixing means is movable between at least two distinct and predetermined locking positions, in order to vary the distance between said first and second fixing means between said at least two distinct and predetermined locking positions.

2. Holding device (11) according to claim 1, wherein said primary structure (22) comprises:
- a first body (23) comprising the first fixing means;
- a second body (24), movable with respect to the first body (23) along said direction and to which second fixing means (30) are integral; and
- locking means (33) for removably locking said second body (24) with respect to first body (23), at least at two distinct and predetermined locking positions.

3. Holding device (11) according to claim 2, wherein said second body (24) is a sledge element sliding on said guide (28) which is integral with said first body (23).

4. Holding device (11) according to claim 3, wherein guide (28) along which the second body (24) may slide, comprises two straight and parallel rails (28).

5. Holding device (11) according to any of claims 2 to 4, wherein said locking means (33) for locking said second body (24) to first body (23) comprise snapping elastic locking means.

6. Holding device according to claim 5, wherein said snapping elastic locking means
comprise at least an elastic appendage (36) with an end (37) connected to said second body (24) of said primary structure (22) and a distal end (38) provided with a tooth (39) which selectively engages a plurality of retaining seats (34, 35) formed on first body (23) of primary structure (22).

7. Holding device (11) according to claim 6, wherein the retaining seats (34, 35) formed on first body (23) of primary structure (22), each comprise a pair (40, 41) of mutually opposed flaps, integral to said first body (23), defining a slit (42, 43) between them, for receiving and holding said tooth (39).

8. Holding device (11) according to any of claims 2 to 7, wherein said first body (23) of primary structure (22) comprises a plurality of distinct bodies (23, 26) fixed to each other.

9. Holding device (11) according to any of claims 2 to 8, wherein said first body (23) of primary structure (22) comprises at least a raised longitudinal centering portion (49), for engaging a corresponding cavity (50) formed on said electrical apparatus.

## Patentansprüche

1. Festhaltevorrichtung (11) zum Koppeln einer elektrischen Vorrichtung (10) mit einer Vorrichtungsanbringschiene (13), wobei die Festhaltevorrichtung folgende Merkmale aufweist:
eine Primärstruktur (22), die eine erste (29) und eine zweite (30) Befestigungseinrichtung aufweist, die entlang einer Richtung, die einer Verlängerung der elektrischen Vorrichtung entspricht, beabstandet sind, um die elektrische Vorrichtung (10) auf lösbare Weise an der Festhaltevorrichtung (11) zu befestigen, wobei zumindest entweder die erste (29) und/oder die zweite (30) Befestigungseinrichtung zwischen einer Mehrzahl von Positionen bewegbar ist; und
eine Kopplungseinrichtung (45, 46, 47) zum lösbaren Koppeln der Festhaltevorrichtung (11) mit der Vorrichtungsanbringschiene (13);
wobei die Festhaltevorrichtung (11) **dadurch gekennzeichnet ist, dass**
zumindest entweder die erste (29) und/oder die zweite (30) Befestigungseinrichtung zwischen zumindest zwei verschiedenen und vorbestimmten Verriegelungspositionen bewegbar ist, um den Abstand zwischen der ersten und der zweiten Befestigungseinrichtung zwischen den zumindest zwei verschiedenen und vorbestimmten Verriegelungspositionen zu variieren.

2. Festhaltevorrichtung (11) gemäß Anspruch 1, bei der die Primärstruktur (22) folgende Merkmale aufweist:
einen ersten Körper (23), der die erste Befestigungseinrichtung aufweist;
einen zweiten Körper (24), der bezüglich des ersten Körpers (23) entlang der Richtung bewegbar ist und in den die zweite Befestigungseinrichtung (30) integriert ist; und
eine Verriegelungseinrichtung (33) zum lösbaren Verriegeln des zweiten Körpers (24) bezüglich des ersten Körpers (23) zumindest in zwei verschiedenen und vorbestimmten Verriegelungspositionen.

3. Festhaltevorrichtung (11) gemäß Anspruch 2, bei der der zweite Körper (24) ein Schlittenelement ist, das auf der Führung (28), die in den ersten Körper (23) integriert ist, gleitet.

4. Festhaltevorrichtung (11) gemäß Anspruch 3, bei der die Führung (28), an der der zweite Körper (24) entlanggleiten kann, zwei gerade und parallele Schienen (28) aufweist.

5. Festhaltevorrichtung (11) gemäß einem der Ansprüche 2 bis 4, bei der die Verriegelungseinrichtung (33) zum Verriegeln des zweiten Körpers (24) an dem ersten Körper (23) eine elastische Einschnapp-Verriegelungseinrichtung aufweist.

6. Festhaltevorrichtung gemäß Anspruch 5, bei der die elastische Einschnapp-Verriegelungseinrichtung
zumindest ein elastisches Zusatzelement (36) aufweist, bei dem ein Ende (37) mit dem zweiten Körper (24) der Primärstruktur (22) verbunden ist und ein distales Ende (38) mit einem Zahn (39) versehen ist, der eine Mehrzahl von Haltesitzen (34, 35), die auf dem ersten Körper (23) der Primärstruktur (22) gebildet sind, selektiv in Eingriff nimmt.

7. Festhaltevorrichtung (11) gemäß Anspruch 6, bei der die Haltesitze (34, 35), die auf dem ersten Körper (23) der Primärstruktur (22) gebildet sind, jeweils ein Paar (40, 41) einander gegenüberliegender Klappen aufweisen, die in den ersten Körper (23) integriert sind und die einen Schlitz (42, 43) zwischen sich bilden, um den Zahn (39) aufzunehmen und festzuhalten.

8. Festhaltevorrichtung (11) gemäß einem der Ansprüche 2 bis 7, bei der der erste Körper (23) der Primärstruktur (22) eine Mehrzahl von verschiedenen Körpern (23, 26) aufweist, die aneinander befestigt sind.

9. Festhaltevorrichtung (11) gemäß einem der Ansprüche 2 bis 8, bei der der erste Körper (23) der Primärstruktur (22) zumindest einen erhöhten längsgerichteten Zentrierabschnitt (49) für eine Ineingriffnahme eines auf der elektrischen Vorrichtung gebildeten entsprechenden Hohlraums (50) aufweist.

## Revendications

1. Dispositif de support (11) destiné à accoupler un appareil électrique (10) à un rail de montage d'appareil (13), dans lequel le dispositif de support comprend :
- une structure primaire (22), qui comprend des premier (29) et second (30) moyens de fixation, espacés le long d'une direction qui correspond à une extension de l'appareil électrique, de façon à fixer de manière amovible ledit appareil électrique (10) au dispositif de support (11), l'un au moins desdits premier (29) et second (30) moyens de fixation étant mobile parmi une pluralité de positions ; et
- un moyen d'accouplement (45, 46, 47) destiné à accoupler de manière amovible le dispositif de support (11) audit rail de montage d'appareil (13) ;
le dispositif de support (11) étant **caractérisé en ce que** :
l'un au moins desdits premier (29) et second (30) moyens de fixation est mobile entre deux positions de verrouillage prédéterminées et distinctes au moins, de façon à faire varier la distance entre lesdits premier et second moyens de fixation entre deux positions de verrouillage prédéterminées et distinctes.

2. Dispositif de support (11) selon la revendication 1, dans lequel ladite structure primaire (22) comprend :
- un premier corps (23) qui comprend le premier moyen de fixation ;
- un second corps (24), mobile par rapport au premier corps (23) le long de ladite direction et d'une pièce avec le second moyen de fixation (30) ; et
- un moyen de verrouillage (33) destiné à verrouiller de manière amovible ledit second corps (24) par rapport au premier corps (23), au niveau de deux positions de verrouillage prédéterminées et distinctes au moins.

3. Dispositif de support (11) selon la revendication 2, dans lequel ledit second corps (24) est un élément de traîneau qui coulisse sur ledit guide (28) qui est d'une pièce avec ledit premier corps (23).

4. Dispositif de support (11) selon la revendication 3, dans lequel le guide (28) le long duquel peut coulisser le second corps (24), comprend deux rails droits et parallèles (28).

5. Dispositif de support (11) selon l'une quelconque des revendications 2 à 4, dans lequel ledit moyen de verrouillage (33) destiné à verrouiller ledit second corps (24) sur le premier corps (23) comprend un moyen de verrouillage élastique par encliquetage.

6. Dispositif de support selon la revendication 5, dans lequel ledit moyen de verrouillage élastique par encliquetage comprend au moins un appendice élastique (36) avec une extrémité (37) connectée audit second corps (24) de ladite structure primaire (22) et une extrémité distale (38) dotée d'une dent (39) qui vient en prise de manière sélective avec une pluralité de sièges de retenue (34, 35) formés sur le premier corps (23) de la structure primaire (22).

7. Dispositif de support (11) selon la revendication 6, dans lequel les sièges de retenue (34, 35) formés sur le premier corps (23) de la structure primaire (22), comprennent chacun une paire (40, 41) de pattes mutuellement opposées, d'une pièce avec ledit premier corps (23), qui définissent entre elles une fente (42, 43), destinée à recevoir et retenir ladite dent (39).

8. Dispositif de support (11) selon l'une quelconque des revendications 2 à 7, dans lequel ledit premier corps (23) de la structure primaire (22) comprend une pluralité de corps distincts (23, 26) fixés les uns aux autres.

9. Dispositif de support (11) selon l'une quelconque des revendications 2 à 8, dans lequel ledit premier corps (23) de la structure primaire (22) comprend au moins une partie de centrage longitudinale relevée (49), destinée à venir en prise avec une cavité correspondante (50) formée dans ledit appareil électrique.
